Europäisches Patentamt

European Patent Office

Office européen des brevets

(11) Veröffentlichungsnummer : **0 169 862**
**B1**

(12) **EUROPÄISCHE PATENTSCHRIFT**

(45) Veröffentlichungstag der Patentschrift :
30.09.87

(21) Anmeldenummer : 85900650.4

(22) Anmeldetag : 26.01.85

(86) Internationale Anmeldenummer :
PCT/DE 85/00025

(87) Internationale Veröffentlichungsnummer :
WO/8503193 (01.08.85 Gazette 85/17)

(51) Int. Cl.⁴ : **A 01 G 17/12**

(54) MEHRTEILIGER, GEPOLSTERTER STAMMHALTERING EINES BAUMPFÄHLE AUFWEISENDEN BAUMSTÄNDERS.

(30) Priorität : 26.01.84 DE 3402821

(43) Veröffentlichungstag der Anmeldung :
05.02.86 Patentblatt 86/06

(45) Bekanntmachung des Hinweises auf die Patenterteilung : 30.09.87 Patentblatt 87/40

(84) Benannte Vertragsstaaten :
AT BE CH FR GB LI LU NL SE

(56) Entgegenhaltungen :
DE-C- 111 181
DE-U- 8 212 913
US-A- 4 110 943

(73) Patentinhaber : SKIERWIDERSKI, Bernhard
Waghäuseler Strasse 10
D-1000 Berlin 31 (DE)

(72) Erfinder : SKIERWIDERSKI, Bernhard
Waghäuseler Strasse 10
D-1000 Berlin 31 (DE)

(74) Vertreter : Maikowski, Michael, Dipl.-Ing. Dr.
Xantener Strasse 10
D-1000 Berlin 15 (DE)

## Beschreibung

Die Erfindung betrifft einen Stammhaltering nach dem Oberbegriff des Anspruchs 1.

Junge, frisch gepflanzte Bäume werden etwa während der ersten zehn Jahre ihres Wachstums durch Baumständer gehalten. Baumständer sind Baugruppen, die den Baum umgebende Baumpfähle aufweisen, deren obere Enden durch Baumhalteringe verbunden sind, die gleichzeitig zur Halterung des Baumstammes während des Wachsens dienen.

Um die Baumhalteringe an die Durchmesserzunahme des wachsenden Baumes anzupassen, werden diese als dreiteilige Schellen ausgebildet, wie es die DE-Gebrauchsmusterschriften 80 25 171 und 82 12 913 beschreiben. Von den bekannten Schellensegmenten erstrecken sich Pfahlhalter nach außen. Diese sind über Pfahlgabeln mit den um die Bäume herum eingegrabenen Baumpfählen verbunden. Die zum Schutz des Baumes innen ausgepolsterten Schellensegmente sind an ihren Enden durch Tangentialschrauben verbunden.

Bereits die Montage eines derartigen Baumständers ist umständlich und zeitraubend. Die Schelle muß in der durch die Baumpfähle bestimmten Höhe mittels der Tangentialschrauben zusammengeschraubt werden. Dabei muß ein gewisses Spiel zwischen Baumstamm und Schelle eingestellt werden. Dies erfordert handwerkliches Geschick. Ferner müssen auf radial sich nach außen erstreckenden Gewindestangen die Pfahlhalter aufgesetzt werden. Mittels Kontermuttern werden diese dann an die Baumpfähle angedrückt und an diesen befestigt. Ein Ausgleich einer meist vorhandenen, naturgemäß bedingten exzentrischen Stellung des Baumens gegenüber diesen Baumständern ist, wenn nicht unmöglich, außerordentlich schwierig.

Zur Anpassung des Schellendurchmessers an die zunehmende Dicke des wachsenden Baumes muß durch Verdrehung der Tangentialschrauben an den Schellensegmenten der Schellenumfang vergrößert werden. Dies ist umständlich, weil dabei die Schellensegmente zur richtigen Halterung des Baumes symmetrisch und zum Baum zentriert verstellt werden müssen Hierzu sind Erfahrung und handwerkliches Geschick erforderlich. Grundsätzlich muß in gewissen Zeitabständen eine Veränderung des Umfanges der Schelle vorgenommen werden.

Durch eine derartige Umfangsvergrößerung wird auch der Abstand zwischen der Schelle und den ortsfesten Baumpfählen verkürzt. Dadurch wird, wegen der auftretenden Reaktionskräfte, die Einstellung der einzelnen Schellensegmente erschwert. Auf die Enden der Baumpfähle werden diese lockernden oder beschädigenden Momentenkräfte übertragen. Der Umgang mit diesen Schellen kann ungeübten Anlernkräften nicht überlassen werden.

Bei Transport älterer Bäume ziemlicher Größe mit einem Gewicht bis zu 6 t werden diese, wie die DE-AS 1 175 933 beschreibt, mittels einer Spannhalterung transportiert. Mit dieser Spannhalterung werden diese älteren und schweren Bäume mit dem ausgegrabenen Wurzelballen aus dem Erdreich gehoben. In dieser Spannhalterung erfolgt der Transport zum neuen Pflanzort.

Diese bekannte Spannhalterung weist zwei konzentrische, zylindrische Bügelhälftenpaare auf. Das innere Paar ist im äußeren drehbar gelagert. Beide Bügelhälftenpaare werden um den herauszuhebenden Baum gelegt und dann geschlossen. Das innere Bügelhälftenpaar trägt eine Spindel mit Druckscheibe. Mittels dieser Spindel wird die Druckscheibe so betätigt, daß ein Baumstamm zwischen dieser und der Innenwand eines Bügels fest eingespannt wird. Die Einspannung muß so fest sein, daß mindestens die Hälfte der beim Ausheben des schweren Baumes auftretenden Hubkräfte an diese Einspannstelle übertragen werden können.

Die bekannten Bügel sind nicht ringförmig ausgebildet, sondern Zylinderabschnitte. Eine derartige, große Einspannkräfte auf einen Baumstamm ausübende, Vorrichtung ist für eine mit Spiel durchzuführende Halterung eines jungen, wachsenden Baumes völlig ungeeignet. Diese bekannte Einspanntechnik kann keine Lösungen der Aufgaben, die bei der Halterung junger, wachsender Bäume auftreten, anregen.

Der Erfindung liegt die Aufgabe zu Grunde, einen Stammhaltering zu schaffen, mit dem der Baumständer leicht und in einfacher Weise gegenüber dem Baum lagerichtig montiert und problemlos dem Baumwachstum beliebig oft angepaßt werden kann.

Diese Aufgabe wird durch die technische Lehre des Anspruchs 1 gelöst.

Der erfindungsgemäße Stammhaltering kann aus einer beliebig vorgegebenen Kombination von geraden und/oder gekrümmten Abschnitten bestehen.

Durch die Verwendung von Stützspeichen, deren Enden mit Spiel den Baum umgeben, ist es möglich, einen Stammhaltering zu verwenden, dessen Durchmesser während des gesamten Wachstums des Baumes nicht verändert werden muß. Da die Enden der Stützspeichen zur Ringachse hin- und von dieser fortbewegbar und in einer gewünschten Einstellung festlegbar sind, ist es bei der ursprünglichen Montage des Baumständers nur erforderlich, diese Enden auf das gewünschte Spiel durch eine entsprechende Bewegung der Stützspeichen einzustellen. Die Enden der Stützspeichen liegen dann auf einer Hüllkurve, die mit dem erforderlichen Spiel den Stamm umgibt. Die Anzahl der Stützspeichen und die Ausbildung der Polsterung ist derart, daß die erforderliche Halterung gewährleistet wird. Das Eingraben der Baumpfähle um den jungen Baum herum kann naturgemäß nicht mit einer großen Maßhaltigkeit erfolgen, so daß sich sehr oft exzentrische Stellungen des Baumstammes gegenüber dem Baumständer ergeben. Eine Anpassung an derartige exzentrische Stellungen ist durch eine entsprechende Einstellung der Stützspeichen möglich.

Eine Anpassung an das Baumwachstum erfolgt in einfachster Weise durch eine Nachstellung der Stützspeichen. Es ist lediglich erforderlich, die Enden der Stutzspeichen weiter vom Baum zu entfernen. Da dabei der Stammhaltering einen konstanten Umfang beibehalten kann, wird der Festigkeitsverband zwischen dem Stammhaltering und den Baumpfählen nicht beeinflußt. Reaktionskräfte treten beim Nachstellen der Stützspeichen nicht auf und es werden auch keine schädlichen Kräfte auf die Baumpfähle übertragen. Dieses einfache Nachstellen der Stützspeichen kann durch angelerntes Hilfspersonal durchgeführt werden, da die hierbei auftretenden Arbeiten keine Erfahrung und kein handwerkliches Geschick erfordern. Es sind lediglich ganz einfache Handgriffe erforderlich.

Die Einstellung des Abstandes der Stützspeichenenden vom Baumstamm kann dadurch erfolgen, daß diese Stützspeichen gegenüber dem Stammhaltering axial bewegt werden. Diese axiale Bewegung erfolgt dann in der Ringebene.

Es liegt im Rahmen der Erfindung, die Stützspeichen so auszubilden, daß sie am Stammhaltering schwenkbar gelagert sind. Durch eine Verschwenkung der Stützspeichen am Stammhaltering werden dann die Enden der Stützspeichen zum Baumstamm hin- oder von diesem fortbewegt.

Es kann für gewisse Anwendungszwecke vorteilhaft sein, daß der Ring die Form eines Polygons hat. Der Ring kann dabei beispielsweise die Form eines Dreiecks oder ganz allgemein die Form eines Vielecks haben und z. B. als Viereck oder Sechseck oder dergleichen ausgebildet sein. Diese Gestaltung des Ringes hängt vom speziellen Verwendungszweck ab.

Eine besonders einfache Ausführungsform ergibt sich, wenn dieser Ring ein Kreisring ist. Ein Kreisring ist wegen der einfachen Fertigung und Montage besonders günstig.

Der Strammhaltering ist in Ringabschnitte unterteilt, die mittels Gelenken klappbar miteinander verbunden sind. Der Ring kann vorgefertigt zur Einbaustelle befördert werden und dort nach Art eines Gliederbandes um den Baum herumgelegt und dann mittels eines Verschlusses in Ringform verriegelt werden. Dies führt zu einer besonders leichten und einfachen Montage. Eine sehr vorteilhafte Ausführungsform bildet hierbei ein zweiteiliger Ring.

Die axiale Bewegung der Stützspeichen in der Ebene des Stammhalteringes kann mittels einer längenverstellbaren Verschraubung erfolgen. Die Verschraubung kann derart sein, daß die Stützspeichen durch Öffnungen mit beliebigem polygonalen Querschnitt hindurchgeführt, auf die vorbestimmte Länge eingestellt und dann mittels Kontermuttern am Stammhaltering festgespannt werden. Dabei Weisen diese Stützspeichen Gewindeabschnitte auf. Es ist aber auch möglich, am Stammhaltering hierfür Gewindebohrungen vorzusehen und dann durch ein Herein- oder Herausschrauben die Längen der Stützspeichen einzustellen und die eingestellten Längen durch Kontermuttern festzulegen.

Die axial bewegbaren Stützspeichen können aber auch am Stammhaltering in Umfangsrichtung einstellbar und in der eingestellten Stellung festellbar sein. Beispielsweise können hierfür Umfangsschlitze im Stammhaltering vorgesehen sein.

Die Anordnung der Umfangsschlitze bzw. die Anordnung der Bohrungen oder Öffnungen wird durch die Verwendungsart bestimmt. Es können beispielsweise beliebig viele Öffnungen und Bohrungen vorgesehen sein, so daß der Bemutzer die Freiheit hat, an beliebigen notwendigen Stellen diese Stützspeichen bei der Montage anzubringen.

Diese Längeneinstellung durch eine Verschraubung kann mit ein paar Handgriffen von ungeübtem Personal durchgeführt werden. Von besonderer Bedeutung ist dabei, daß auf alle Fälle die geometrischen Abmessungen des Stammhalteringes ein für allemal konstant bleiben.

Die Stützspeichen können aber auch senkrecht zur Ringebene oder in diese verschwenkbare Hebel sein, die in Eingriff mit einem am Stammhaltering drehbar gelagerten Stellring stehen. Eine derartige Ausbildung bringt den Vorteil mit sich, daß zur Einstellung aller Stützspeichen nur der Stellring betätigt werden muß. Diese Betätigung des Stellringes kann an einer einzigen Stelle erfolgen, so daß durch eine einzige Betätigungshandlung alle Stützspeichen eingestellt werden. Eine derartige Ausbildung ist nur bei kreisförmigen Stammhalteringen möglich. Bei zweiteiligen Stammhalteringen ist es lediglich erforderlich, die Stellringe so auszubilden, daß sie den gleichen Umfang haben wie die Hälften des Stammhalteringes. Bei geschlossenem Stammhaltering liegen sie dann mit ihren Enden bündig gegeneinander an. Wenn ein Stellringabschnitt dann betätigt wird, wird der andere Stellringabschnitt zwangsläufig mitgenommen. Die Führung des Stellringes am Stammhaltering kann ganz einfach sein. Es kann hierzu eine einfache Führungsnut oder ein Führungsansatz am Innenabschnitt des Stammhalteringes vorgesehen sein, da bei geschlossenem Stammhaltering ein Herausfallen des Stellringes dann nicht mehr möglich ist.

Die Stützspeichen können an ihren Enden Puffer aus einem kälteflexiblen Material tragen. Diese Puffer sind an den Enden der Stützspeichen auswechselbar montiert, um gegebenenfalls im Laufe der Zeit durch Witterungseinflüsse verschlissene Puffer auswechseln zu können. Die Polster können aber auch gebogene Polsterelemente sein, die eine Armierung tragen und teilweise den Baumstamm umgeben. Dabei können mehrere Stützspeichen in eine derartige gebogene Polsterung eingreifen. Kantenabschnitte der Stützspeichen können ebenfalls eine Polsterung aus kälteflexiblem Material aufweisen.

Am Stammhaltering können die Baumpfähle direkt montiert, beispielsweise angelenkt sein, die dann am Erdboden in an sich bekannter Weise befestigt werden. Es ist aber auch möglich, diesen Stammhaltering an eingegrabenen Baumpfählen mittels Pfahlhaltern zu befestigen, die sich vom Stammhaltering aus nach außen erstrecken. Zur Erweiterung der Einstellmöglichkeiten dieses Stammhalteringes sind gemäß weiterer Erfindung diese Pfahlhalter dann am Stammhaltering in einer gewünschten Längeneinstellung in lösbarer Weise festlegbar. Hierzu können, wie bei den Stützspeichen, längeneinstellbare Schraubverbindungen mit dem Stammhaltering verwendet werden.

Da die Baumpfähle nicht genau parallel zum Baumstamm stehen, können in vorteilhafter Weise die Pfahlhalter zur Einstellung der Kipplage einer Pfahlgabel arretierbare Gelenke aufweisen. Die Pfahlgabel kann dann zur optimalen Anpassung an den Baumpfahl in die richtige Lage gekippt und mit dem Baumpfahl durch Vernagelung oder Anbinden verbunden werden.

Es ist möglich, die Pfahlhalter genauso wie die Stützspeichen in Umfangsrichtung einstellbar zu montieren. Mit besonderem Vorteil kann dabei das Profil der Stammhalteringe so gestaltet sein, daß dieses Profil Halterungselemente für die Pfahlhalter aufnimmt. Mittels dieser Halterungselemente können die Pfahlhalter in Umfangsrichtung verschoben und dann am Stammhaltering festgespannt werden.

Eine besonders bevorzugte Ausführungsform ist ein zweiteiliger, kreisförmiger Stammhaltering, an dem sechs axial verschiebbare Stützspeichen vorgesehen sind. Diese Stützspeichen sind vorzugsweise im gleichen Winkelabstand von 60° angeordnet. Jeweils drei Stützspeichen liegen in einem Ringabschnitt. Weiterhin sind bei dieser Ausführungsform drei nach außen sich erstreckende Pfahlhalter vorgesehen. Diese Pfahlhalter haben vorzugsweise in Umfangsrichtung gleiche Winkelabstände von 120°.

Wenn die Stützspeichen senkrecht zur Ringebene verschwenkbar sind, können diese als zweiarmige Hebel ausgebildet sein. Insbesondere sind dann die Stützspeichen Winkelhebel, die im Bereich des Schnittpunkts der beiden Hebelarme drehbar am Stammhaltering gelagert sind. Ein Hebelarm, der kürzer ist, erstreckt sich etwa parallel zum Ringinnenrand nach unten. Der andere Hebelarm erstreckt sich in radialer Richtung zur Ringachse hin. Der sich nach unten erstreckende Hebelarm greift in Führungen des Stellringes ein. Wenn der Stellring verdreht wird, wird dieser Hebelarm vom Stellring mitgenommen und der andere Hebelarm, der sich zum Baum hin erstreckt, macht die Bewegung mit. Diese Bewegung kann dessen Ende zum Ringzentrum hin- und von diesem Fortführen.

Zur Vergrößerung des Einstellhubes schließen die beiden Hebelarme der Stützspeichen einen stumpfen Winkel ein. Dabei schließt der zum Ringzentrum hinweisende Hebelarm mit der Ringebene einen Winkel von 45° ein. Dieser Hebelarm kann sich gegenüber der Ringebene nach oben oder nach unten erstrecken.

Die senkrecht zur Ringebene verschwenkbaren Stützspeichen können auch gestreckte Hebel sein, deren eines Ende am Stammhaltering drehbar gelagert ist. Diese Hebel erstrecken sich durch Führungsnuten hindurch, die im Stellring ausgebildet sind. Durch eine entsprechende Verdrehung des Stellringes werden die Hebel in den Führungsnuten so geführt, daß sie gegenüber der Ringebene angehoben oder abgesenkt werden. Der Stellring wird durch eine konzentrisch zum Stammhaltering verlaufende Zylinderfläche gebildet, in der schräg zu den Mantellinien verlaufende Führungsnuten angeordnet sind.

Ein einfacher Aufbau ergibt sich, wenn der Stammhaltering einen kreisförmigen Querschnitt aufweist. auf diesem kreisförmigen Querschnitt können festspannbare Tragringe angeordnet sein. Diese Tragringe können beispielsweise nach Art einer Schelle verspannbar sein. Sie können auch Spannschrauben tragen, die gegen den Stammhaltering angezogen werden können. An diesen Tragringen sind dann Stützspeichen befestigt. Diese Stützspeichen können gegenüber der Stammhalteringebene verschwenkt und in dieser Schwenklage eingestellt werden. Ferner können sie um den Umfang des Stammhalteringes herum in die gewünschte Lage gebracht und in dieser festgespannt werden.

Die Stützspeichen können auch als gerade Hebel ausgebildet sein, die mit einem Ende am Stammhaltering angelenkt in der Ringebene verschwenkbar sind. Aus dieser etwa radialen Stellung heraus können diese Stützspeichen in der Ringebene nach zwei Richtungen bewegt werden. Dabei wird der von den Enden der Stützspeichen bestimmte Umfang der Hüllkurve vergrößert. Diese Stützspeichen können Führungszapfen tragen, die in Führungsnuten eines Stellringes eingreifen, so daß wieder von einer einzigen Stelle aus die Verschwenkung durchgeführt werden kann.

Bei einer weiteren bevorzugten Ausführungsform sind die senkrecht zur Ringebene verschwenkbaren Stützspeichen gebogene Hebel. Diese gebogenen Hebel sind am Stammhaltering in der Art gehalten, daß sie sich in Umfangsrichtung nicht bewegen jedoch in der Halterung verschwenken können. Diese Hebel sind gebogene Hebel und haben eine Öffnung mit polygonalem Querschnitt am gehaltenen Ende. Durch diesen Querschnitt hindurch erstreckt sich ein Stellring, der Spiralen aufweist. Wenn beispielsweise die Öffnung am Hebel einen quadratischen Querschnitt hat, so kann sich durch diese Öffnung ein Stellring erstrecken, der aus einem tordierten Vierkant hergestellt ist. Wenn ein tordierter Vierkant, der Spiralkanten aufweist, durch die quadratische Öffnung hindurchbewegt wird, wird auf den Hebel in bekannter Weise eine Drehkraft ausgeübt. Die gebogene Kante des Hebels trägt eine Polsterung, die die Stützfläche bildet, die den Baumstamm mit Spiel umgibt.

Durch das Prinzip des starren Stammhalteringes mit unveränderlichen Abmessungen und der gegenüber dem Ringzentrum einstellbaren Stützspeichen ist es möglich, mit einem einfachen Satz von Bauelementen alle bei der Halterung und Stützung von Jungbäumen auftretenden Problemen in einfachster Weise zu lösen.

Der Stammhaltering kann einen U-profilförmigen Querschnitt aufweisen, derart, daß ein außen um den Stammhaltering herumlaufender Kanal gebildet wird. Die Schenkel des U-Profil erstrecken sich radial nach außen. Dieser Kanal bildet einen sehr guten Schutz für die sonst aus dem Stammhaltering herausragenden Gewindeenden.

Mit besonderem Vorteil kann ein Verbindungsstück zwischen dem Stammhaltering und einem Baumpfahl in diesen Kanal des U-Profils einsetzbar sein. Ein Schenkel dieses U-Profils, vorzugsweise der untere, kann eine Anzahl Einschnappöffnungen aufweisen, in die ein, in das Verbindungsstück eingesetzter, selbstschnappender Stift einrastbar ist.

Dieses Verbindungsstück kann aber auch ein gegabeltes Ende aufweisen. Ein Gabelabschnitt kann dabei im Kanal des U-Profils gegen die Innenseite eines Schenkels anliegen und mittels eines Zapfens in eine Bohrung im Schenkel eingreifen. Der andere Gabelabschnitt umfaßt dann den Stammhaltering von außen und liegt auf der Außenseite des anderen oder gegenüberliegenden Schenkels auf. Zur Halterung ist an diesem Gabelabschnitt eine Druckschraube vorgesehen, die gegen den Schenkel dann festspannbar ist. Zum Einsetzen und Herausnehmen muß bei dieser Ausführungsform eine in Achsrichtung verlaufende und eine radiale Bewegung des Verbindungsstückes durchgeführt werden. Bei einer abgeänderten Ausführungsform greift der Zapfen am im Kanal liegenden Gabelabschnitt des Verbindungsstückes in ein Langloch ein und der andere Schenkel des U-Profils in eine Nut im gegabelten Ende des Verbindungsstückes. Auch hier wird wieder eine Sperrwirkung erzielt, da nach Lösung der Druckschraube zuerst eine rein radiale Bewegung durchgeführt wird, bei der der Zapfen im Langloch gleitet und der andere Schenkelabschnitt aus der Nut austreten kann. Erst danach kann eine Bewegung in Achsrichtung eine Lösung des Verbindungsstückes ermöglichen.

Eine weitere vorteilhafte Ausführungsform des Stammhalteringes weist ein J-förmiges Profil auf, welches ebenfalls einen nach außen offenen umlaufenden Kanal bildet. Der untere gebogene Schenkel dieses J-Profils weist einen Wulstrand auf und das Verbindungsstück hat ein gegabeltes Klauenende, welches durch eine Schwenkbewegung dann in dieses Ringprofil eingehängt werden kann.

Ausführungsbeispiele der Erfindung sollen in der folgenden Beschreibung unter Bezugnahme auf die Fig. der Zeichnungen erläutert werden.

Es zeigen :

Figuren 1-3 schematische Draufsichten auf Ausführungsformen des Stammhalteringes,

Figur 4 eine vergrößerte Ansicht eines Pfahlhalters,

Figur 5 eine schematische Schnittansicht einer Ausführungsform des Stammhalteringes, der Stützspeichen und des Pfahlhalters,

Figur 6 eine Schnittansicht des Stammhalteringes mit einer anderen Ausführungsform einer axial verschiebbaren Stützspeiche,

Figur 7 eine Seitenansicht des in Fig. 6 dargestellten Stammhalteringes,

Figur 8 eine schematische Schnittansicht einer Befestigung für den Pfahlhalter,

Figur 9 eine schematische Schnittdarstellung einer senkrecht zur Ringebene verstellbaren Stützspeiche,

Figuren 10 und 11 Draufsichten auf Ausführungsformen des in Fig. 9 dargestellten Stellringes,

Figur 12 eine Schnittansicht eines Antriebs für den Stellring,

Figuren 13-17 weitere Ausführungsformen von Stützspeichen, die senkrecht zur Ringebene verschwenkbar sind,

Figur 18 eine schematische Draufsicht auf eine Stützspeiche, die in der Stellringebene verschwenkbar ist,

Figur 19 eine Schnittansicht einer Ringquerschnittsform des Stammhalteringes und

Figuren 20-23 weitere Schnittansichten von Querschnittsformen mit einsetzbaren Verbindungsstücken zwischen dem Stammhaltering und einem Baumpfahl.

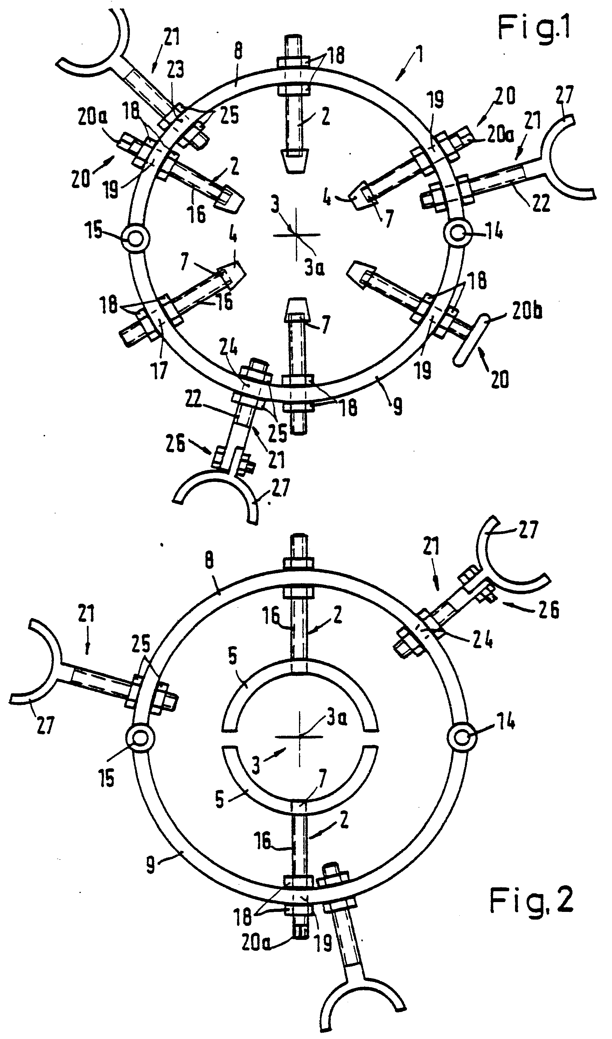

Der in Fig. 1 dargestellte Stammhaltering 1 ist kreisförmig ausgebildet und besteht aus zwei Ringabschnitten 8, 9. Diese Ringabschnitte 8, 9 sind mittels eines Gelenkes 14 klappbar verbunden. Diese Ringabschnitte können um dieses Gelenk herum in eine Öffnungsstellung verschwenkt werden. In der Schließstellung können sie mittels eines Verschlusses 15 verschlossen werden. Bei diesem Verschluß 15 kann es sich um einen Bolzenverschluß handeln. Das Gelenk 14 kann ein Bolzengelenk oder ein Scharnier sein. An beiden Stellen können aber auch Augen vorgesehen sein, die in bekannter Weise ineinandergreifen und mittels Splinten oder Bolzen verbunden werden können.

Bei diesem Ausführungsbeispiel trägt jeder Ringabschnitt 8, 9 drei Stützspeichen 2. Diese Stützspeichen 2 erstrecken sich vom Stammhaltering 1 aus nach innen zum Ringzentralbereich 3 hin. Durch diesen Ringzentralbereich 3 erstreckt sich, bei der Darstellung senkrecht zur Zeichenebene, die Ringachse 3a. Dieser Ringzentralbereich 3 ist der Bereich, durch den sich dann der Baum erstreckt. An den Enden 7 der Stützspeichen 2 sind Puffer 4 aus einem kälteflexiblem Material, beispielsweise einem kälteflexiblem Gummi angeordnet. Diese Puffer können aufgesteckt oder aufgeschraubt sein. Die Befestigung ist derart, daß einerseits diese Puffer sicher gehalten, andererseits aber leicht ausgewechselt werden können.

Die Ringabschnitte 8, 9 weisen an ihrem Umfang mehrere Öffnungen 17 oder Gewindebohrungen 19 auf.

Die Öffnungen 17 können einen beliebigen polygonalen Querschnitt haben und sind nicht mit einem Gewinde versehen. Der Querschnitt, der dreieckig, viereckig, sechseckig oder dergleichen sein kann, ist an die Abmessungen der Stützspeichen angepasst. Eine Stützspeiche 2 weist einen Gewindeabschnitt 16 auf. Mit diesem Gewindeabschnitt 16 wird die Stützspeiche 2 in die Öffnung 17 derart eingesetzt, daß sie sich mit einer gewünschten Länge zum Ringzentralbereich 3 hin erstreckt. Die Länge wird derart eingestellt, daß sich zwischen dem Puffer 4 und dem Stamm des Jungbaumes das erforderliche Spiel ergibt. In dieser Lage wird dann die Stützspeiche 2 mittels der Kontermuttern 18 am Ringabschnitt 8 oder 9 festgelegt. Falls erforderlich oder gewünscht können Beilagscheiben verwendet werden.

Es ist auch möglich, die Stützspeichen 2 mit ihren Gewindeabschnitten in Gewindebohrungen 19 einzuschrauben. Für dieses Einschrauben weisen dann die Stützspeichen 2 an ihren Enden 20 entweder Vier- oder Sechskante 20a oder Flügel 20b auf. Durch eine entsprechende Verschraubung wird dan die Länge der Stützspeiche 2 eingestellt und eine Festlegung erfolgt wieder über Kontermuttern 18.

Die Ringabschnitte 8, 9 weisen ferner Öffnungen 23 bzw. Gewindebohrungen 24 auf. Die Öffnungen 23 haben kein Gewinde und können einen beliebigen polygonalen Querschnitt haben. Diese Öffnungen 23 und die Gewindebohrungen 24 dienen dazu, die Gewindeabschnitte von Pfahlhaltern 21 aufzunehmen, die sich vom Stammhaltering 1 aus nach außen erstrecken. Die Länge, um die sie sich nach außen erstrecken, kann in der gleichen Weise wie bei den axial sich erstreckenden Stützspeichen 2 eingestellt und mittels Kontermuttern 25 festgelegt werden.

Die Pfahlhalter 21 tragen an ihren Enden Pfahlgabeln 27 und mit diesen Pfahlgabeln wird dann der Stammhaltering 1 an nicht dargestellten Baumpfählen befestigt.

Bei der Montage können die Stützspeichen 2 in einer zurückgezogenen Stellung an den Ringabschnitten 8, 9 angeordnet werden. Der Stammhaltering 1 wird im aufgeklappten Zustand um den Baum herumgelegt und dann geschlossen. Die Pfahlhalter 21 werden in entsprechender Weise eingestellt und die Pfahlgabeln 27 mit den nicht dargestellten Baumpfählen verbunden. Durch eine entsprechende Verschraubung können nun die Stützspeichen 2 so eingestellt werden, daß deren Puffer 7 um den Baumstamm herum mit einem vorbestimmten Spiel angeordnet werden.

Wenn zur Anpassung an das Wachstum des Baumes eine Nachstellung erforderlich ist, ist es lediglich nötig, die Stützspeichen 2 in entsprechender Weise axial zu verschieben. Die Kontermuttern 18 werden gelöst und es erfolgt entweder eine Verschiebung oder eine Verschraubung der Stützspeichen 2 in die entsprechende Endstellung. Dann werden die Kontermuttern 18 wieder festgezogen. Diese Arbeit ist sehr einfach und kann von ungelerntem Personal durchgeführt werden.

Je nach den Bedingungen können anstelle von sechs Stützspeichen 2 auch lediglich drei oder mehr verwendet werden. Auch die Anzahl der Pfahlhalter kann entsprechend gewählt werden.

Bei dem in Fig. 2 dargestellten Ausführungsbeispiel sind zwei Stützspeichen 2 vorgesehen, die speziell ausgebildete Polsterungen und zwar bogenförmige Polsterelemente 5 tragen. Diese bogenförmigen Polsterelemente bestehen aus einem kälteflexiblen Material und haben eine Versteifungsarmierung. Diese bogenförmigen Polsterelemente umgeben teilweise den Umfang des Baumes. Der Umfang dieser Polsterelemente kann auch kleiner sein und es können weitere Stützspeichen mit Puffern 4 vorgesehen sein. Es ist möglich, Kombinationen der in den Fig. 1 und 2 dargestellten Ausführungsformen der Polsterung vorzusehen.

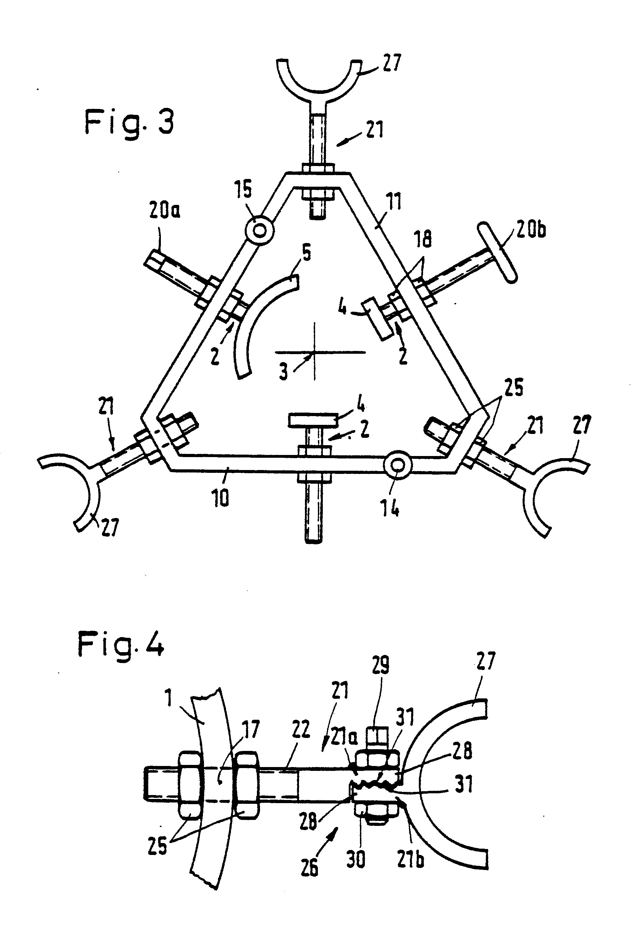

Fig. 3 zeigt einen Stammhaltering, dessen Ringabschnitte 10, 11 die Form eines Dreiecks ergeben. Ein derartiger Stammhaltering kann beispielsweise bei kleinen Bäumen mit drei Baumpfählen verwendet werden. Anstatt eines Dreiecks können auch andere Vieleckformen verwendet werden. In Fig. 3 ist ferner eine Kombination von verschiedenen Polsterelementen gezeigt und zwar sind an den Stützspeichen 2 sowohl Puffer 4 als auch ein bogenförmiges Polsterelement 5 vorgesehen. Das bogenförmige Polsterelement 5 kann auch aus zwei Teilen bestehen, die verschwenkbar und arretierbar an den Stützspeichen 2 angelenkt sind.

Fig. 4 zeigt eine Ausführungsform eines Pfahlhalters 21, bei dem die Kippstellung der Pfahlgabel 27 einstellbar ist. Der Pfahlhalter 21 weist zwei Abschnitte 21a, 21b auf. Diese beiden Abschnitte 21a, 21b sind mittels des Drehzapfens 29 verschwenkbar miteinander verbunden. Im Bereich des Drehzapfens 29 weisen diese Abschnitte 21a, 21b Scheiben 28 auf, die auf der Innenseite eine Verzahnung 31 haben. Die Pfahlgabel 27 kann um den Zapfen 29 verschwenkt werden. In der eingestellten Schwenklage werden dann die Kontermuttern 30 festgezogen und dadurch greifen die Verzahnungen 31 ineinander, so daß die eingestellt Kipplage der Pfahlgabel 27 dadurch arretiert wird.

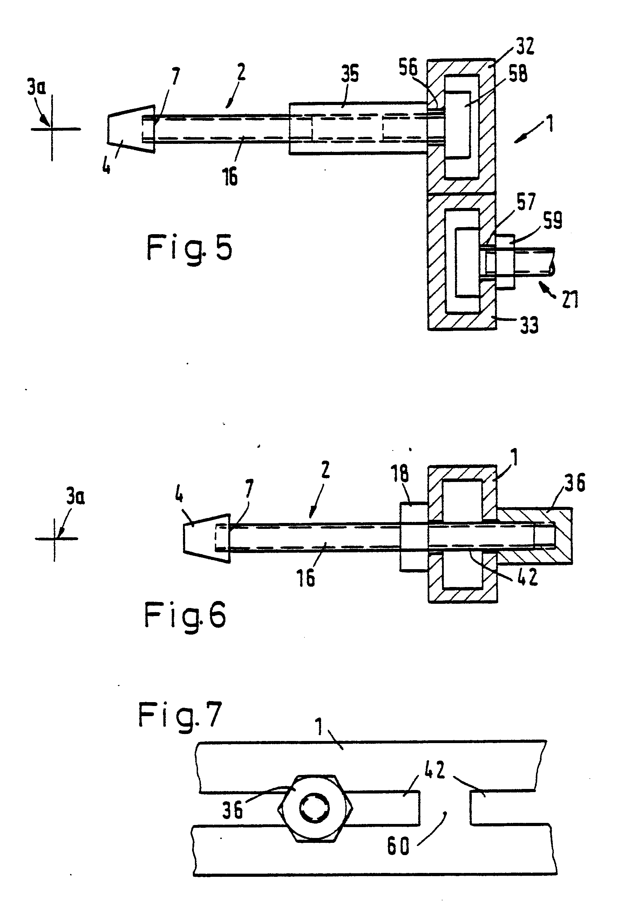

In Fig. 5 ist ein Ausführungsbeispiel dargestellt, bei welchem sowohl der Pfahlhalter 21 als auch die Stützspeiche 2 in Umfangsrichtung einstellbar und arretierbar sind.

Der Stammhaltering 1 besteht aus zwei geflanschten U-Profilen 32, 33. Diese geflanschten U-Profile weisen Schlitze 56, 57 auf. Die U-Profile 32, 33 können miteinander in der dargestellten Lage verschweißt sein. Die Schlitze 56 des oberen U-Profils 32 sind nach innen und die Schlitze 57 des unteren U-Profils 33 sind nach außen geöffnet. Durch die Schlitze 56 hindurch erstrecken sich Halterungsschrauben 58, auf die Gewindehülsen 35 aufgeschraubt sind. Mittels der Gewindehülsen 35 und der Schrauben 58 kann die, im oberen Abschnitt der Fig. 5, dargestellte Baugruppe in dem Schlitz 56 verschoben und in einer vorbestimmten Lage arretiert werden.

In die Gewindehülse 35 ist der Gewindeabschnitt 16 einer Stützspeiche 2 eingeschraubt. Durch ein Herein- bzw. Herausschrauben der Stützspeiche 2 in diese Gewindehülse 35 kann das Ende 7 der Stützspeiche 2 mit dem Puffer 4 gegenüber der Ringachse 3a in gewünschter Weise bewegt werden. Es ist eine doppelte Einstellung der Stützspeiche 2 möglich, nämlich einmal eine Einstellung der Winkellage am Stammhaltering 1 und eine Einstellung der länge, um die sich diese Stützspeiche 2 nach innen erstreckt.

Der Pfahlhalter 21 erstreckt sich nach außen durch den Schlitz 57. Mittels einer Kontermutter 59 ist die eingestellte Umfangsstellung des Pfahlhalters 21 am Stammhaltering 1 einstellbar. Zur Einstellung der Länge kann bei diesem Ausführungsbeispiel ebenfalls eine Gewindehülse wie die Gewindehülse 35 vorgesehen werden.

Bei dem in den Fig. 6 und 7 dargestellten Ausführungsbeispiel weist der Stammhaltering 1 in Umfangsrichtung sich erstreckende Schlitze 42 auf, zwischen denen Stege 60 belassen sind. Die Stützspeiche 2 wird in diesem Umfangsschlitz 42 in Umfangsrichtung eingestellt und dann mittels der Kontermutter 18 und der Schraubenkappe 36 festgelegt. Zur Längeneinstellung ist eine Lösung der Kontermutter 18 und der Schraubkappe 36 erforderlich. Hierzu sind aber wiederum lediglich einfache Handgriffe notwendig.

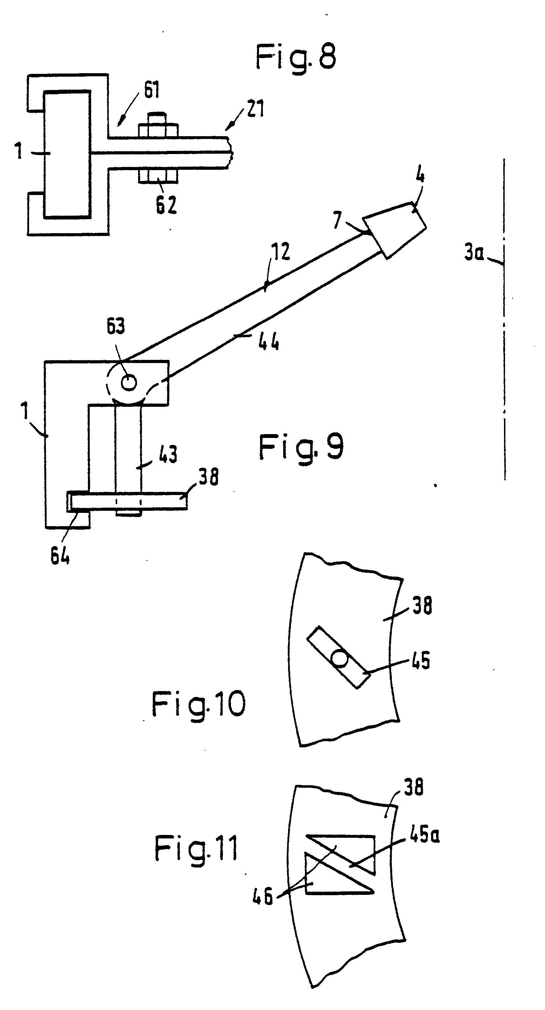

Fig. 8 zeigt ein weiteres Ausführungsbeispiel für die Anbringung eines Pfahlhalters 21 am Stammhaltering 1. Die Anbringung ist derart, daß eine Einstellung in Umfangsrichtung ermöglicht wird. Es ist eine Spannklammer 61 vorgesehen, die den Stammhaltering 1 umgibt und mittels der Spannschraube 62 gelöst und festgezogen werden kann. Mit dieser Spannklammer kann der nicht dargestellte, sich an diese anschließende Pfahlhalter 21 um den Umfang des Stammhalterings 1 herum eingestellt und dann in der eingestellten Lage festgestellt werden.

Die Fig. 9 zeigt ein Ausführungsbeispiel einer Stützspeiche 12, die am Stammhaltering 1 bei 63 schwenkbar gelagert ist. Die Anordnung ist derart, daß die Stützspeiche 12 in einer Ebene senkrecht zur Ringebene verschwenkt werden kann. Wenn man beispielsweise bei der Darstellung in Fig. 9 die Stützspeiche nach oben verschwenkt, so entfernt sich der Puffer 4 von der Ringachse 3a.

Die Stützspeiche 12 ist ein zweiarmiger Hebel, der die Hebelarme 43, 44 aufweist. Diese Hebelarme 43, 44 sind unter einem Winkel angeordnet und schließen insbesondere einen stumpfen Winkel ein. Der Hebelarm 43 erstreckt sich etwa parallel zur Wandung des Stammhalterings 1 nach unten zu einem Stellring 38 hin. Beim dargestellten Ausführungsbeispiel ist der Stellring 38 in einer Nut 64 des Stammhalteringes 1 geführt.

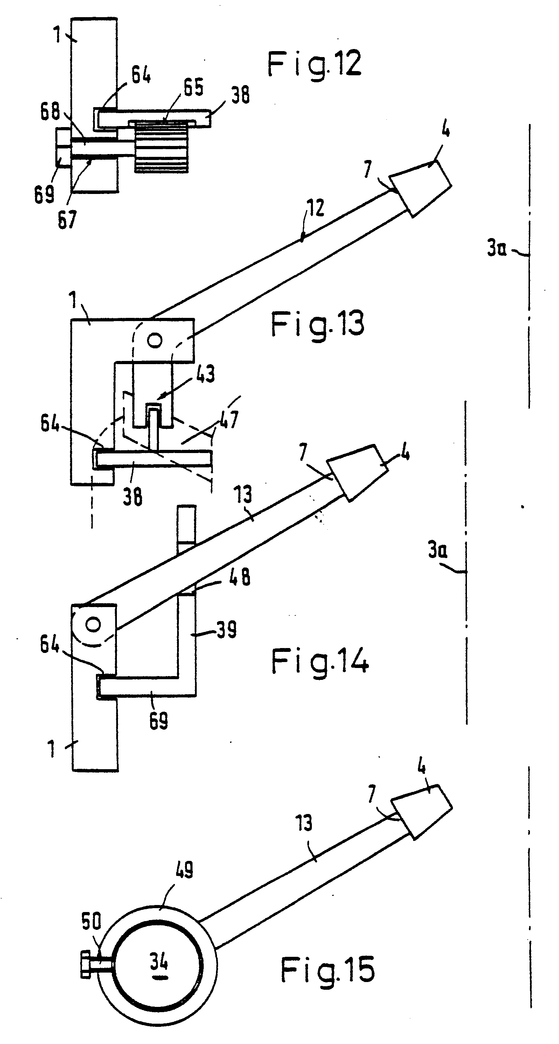

Wie Fig. 10 zeigt, weist der Stellring 38 eine schräg verlaufende Führungsnut 45 auf und durch diese Führungsnut hindurch erstreckt sich der Hebelarm 43. Wird nun der Stellring 38 verdreht, so nimmt die Führungsnut 45 den Hebelarm 43 mit und dadurch wird auch der Hebelarm 44 verschwenkt. Bei dem in Fig. 11 dargestellten Ausführungsbeispiel trägt der Stellring 38 zwei Keilabschnitte 46, zwischen denen eine Führungsnut 45a ausgebildet ist, in die sich dann das Ende des Hebelarms 43 hinein erstreckt. Der Hebelarm 44 erstreckt sich bei dem dargestellten Ausführungsbeispiel gegenüber der Ebene des Stammhalterings 1 nach oben. Der Winkel zwischen dieser Ringebene und dem Hebelarm 44 kann vorzugsweise 45° betragen.

Wie bereits dargelegt, ist der Stellring 38 so ausgebildet, daß er den gleichen Umfang wie die Ringabschnitte 8, 9, hat. Im geschlossenen Zustand des Stammhalteringes 1 liegen deshalb die Enden der Abschnitte des Stellrings 38 bündig gegeneinander an, so daß sich der Stellring 38 als Ganzes drehen kann.

Ein Ausführungsbeispiel für den Antrieb des Stellringes 38 ist in Fig. 12 dargestellt. Der Stellring 38 weist einen Zahnabschnitt 65 auf. Dieser Zahnabschnitt 65 kann durch entsprechende Einkerbungen oder Spalten im Stellring 38 gebildet sein. Ein Ritzel kämmt mit dem Zahnabschnitt 65 und ist bei 67 im Stammhaltering 1 drehbar gelagert. Die Ritzelachse 68 trägt einen außerhalb des Stammhaltering 1 angordneten Betätigungskopf 69. Wenn auf den Betätigungkopf 69, der beispielsweise ein Vier- oder Sechskant sein kann, eine Kurbel aufgesetzt wird, kann über das Ritzel 66 der Stellring 38 in der gewünschten Drehrichtung verdreht werden, so daß die gewünschte Einstellung durchgeführt werden kann.

Bei der in Fig. 13 dargestellten Ausführungsform ist der Hebelarm 43 gegabelt und die Gabelenden umfassen eine Führungsschiene 47. Diese Führungsschiene 47 ist schräg auf den Stellring 38 aufgesetzt. Bei einer Verdrehung des Stellringes 38 nimmt die Führungsschiene 47 das Gabelende des Hebelarms 43 mit und dadurch wird die Stützspeiche 12 in entsprechender Weise verschwenkt.

Fig. 14 zeigt ein Ausführungsbeispiel, bei dem die Stützspeiche 13 mit einem Ende am Stammhaltering 1 angelenkt ist. Wie dargestellt, erstreckt sich die Stützspeiche 13 durch eine Führungsnut 48 in einem Stellring 39 hindurch, der die Form eine Zylinderringes hat. Ein Flanschabschnitt 69 dieses Zylinderringes ist in der Führungsnut 64 geführt. Die Führungsnut 48 verläuft zur Mantellinie des den Stellring 39 bildenden Zylinders schräg, so daß durch eine Drehung des Stellringes 39 die Stützspeiche 13 aufwärts und abwärts, d. h. zur Ringachse 3a hin- oder von dieser fortbewegt werden kann. Der Antrieb dieses Stellringes erfolgt von einer Stelle aus und kann, wie in Fig. 12 gezeigt, ausgebildet sein.

In Fig. 15 ist ein Stammhaltering 34 gezeigt, der einen kreisförmigen Querschnitt hat. Auf diesem Stammhaltering 34 sind Tragringe 49 angeordnet. Diese Tragringe 49 sind und den Ring 44 herum in Umfangsrichtung verschiebbar und um die Mittelachse des Stammhalteringes 34 drehbar. Die Umfangs- und Drehstellung des Tragringes 49 kann mittels einer Schraube 50 arretiert werden, die gegen den Stammhaltering 34 festgezogen wird. Der Tragring 49 kann stattdessen auch nach Art einer festspannbaren Schelle ausgebildet sein. Am Tragring 49 ist die Stützspeiche 13 befestigt, die senkrecht zur Ebene des Stammhalteringes 34 verschwenkbar und in ihrer Winkelstellung einstellbar ist.

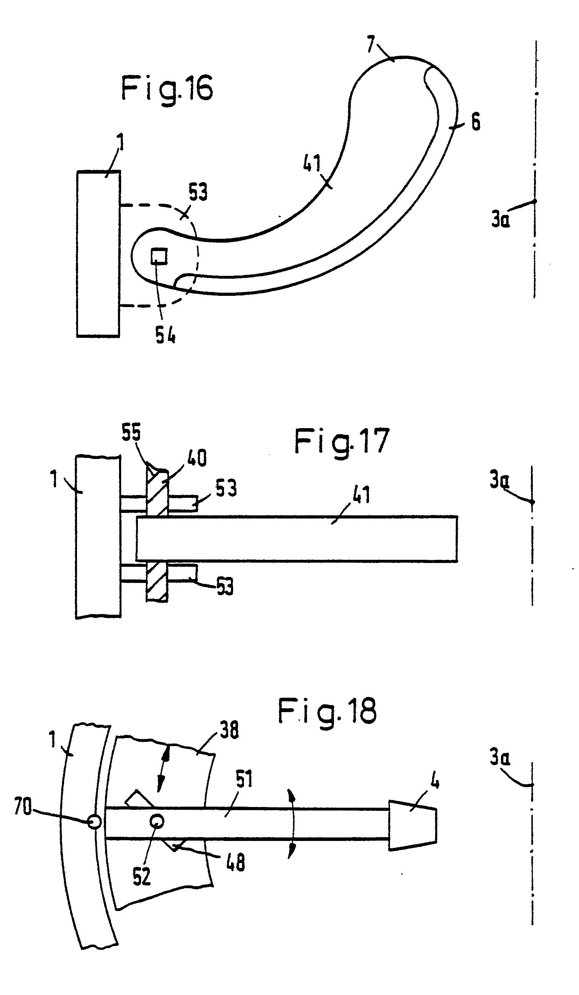

Die Fig. 16 und 17 zeigen ein Ausführungsbeispiel, bei welchem die Stützspeiche ein gekrümmter Hebel 41 ist. Dieser gekrümmte Hebel 41 weist an einem Ende eine Öffnung 54 mit polygonalem Querschnitt auf. Beim dargestellten Ausführungsbeispiel ist dieser Querschnitt quadratisch. Durch diese quadratische Öffnung 54 hindurch erstreckt sich ein Stellring 40. Dieser Stellring 40 weist Spiralen 55 auf. Beim dargestellten Ausführungsbeispiel kann der Stellring 40 aus einem tordierten Vierkant hergestellt sein. Der Hebel 41 ist auf den Stellring 40 aufgesetzt und wird durch Augen 53 an einer Umfangsverschiebung gegenüber dem Stammhaltering 1 festgehalten. Wenn man nun den Stellring 40 dreht, so wird durch den Eingriff der tordierten Spiralen 55 in die Ecken der Öffnung 44 eine Drehkraft auf den Hebel 41 übertragen. Bei diesem Ausführungsbeispiel ist eine Polsterkante 6 vorgesehen. Diese Polsterkante 6 weist zum Baumstamm hin. Zwischen dieser Polsterkante 6 und dem Baumstamm wird das gewünschte Spiel eingestellt.

In Fig. 18 ist schematisch eine Stützspeiche dargestellt, die als Hebel 51 ausgebildet ist. Dieser Hebel 51 ist bei 70 am Stammhaltering 1 drehbar gelagert. Die Lagerung ist derart, daß der Hebel 51 in der Ringebene in Richtung der dargestellten Pfeile verschwenkt werden kann. Dieser Hebel 51 trägt einen Führungszapfen 52. Dieser Führungszapfen 52 greift in die Führungnut 48 eines Stellringes 38 ein, der so ausgebildet sein kann, wie es im Vorstehenden beschrieben wurde.

Durch eine Verdrehung des Stellringes 38 kann der Puffer 4 in Richtung der angezeigten Pfeile verschwenkt werden.

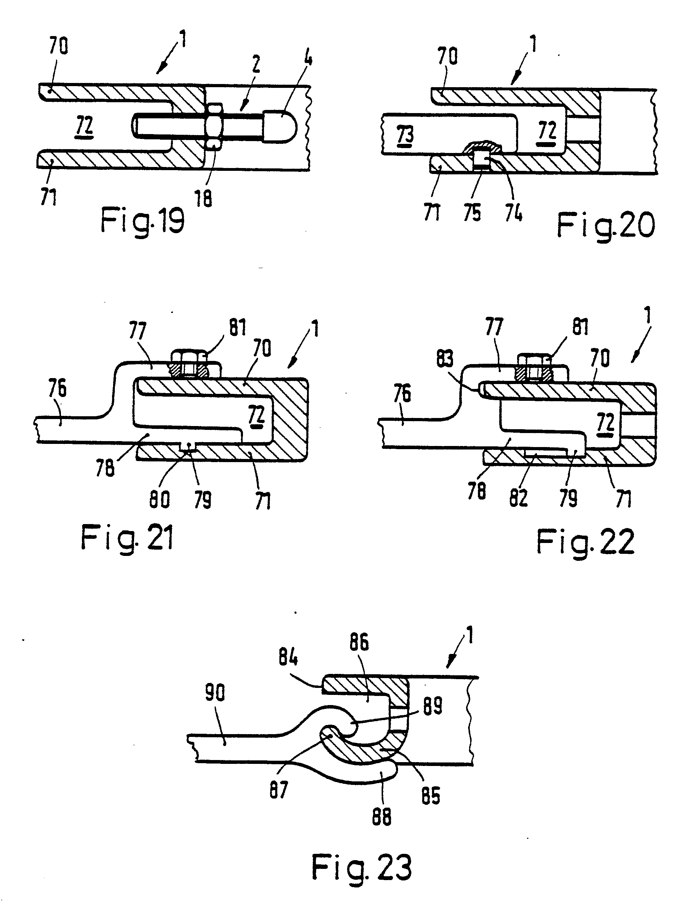

Wie Fig. 19 zeigt, kann der Stammhaltering 1 den Querschnitt eines U-Profils haben. Die Ausbildung ist derart, daß dadurch am Stammhaltering 1 ein umlaufender, nach Außen offener Kanal 72 ausgebildet wird, der von den Schenkeln 70, 71 des U-Profils begrenzt wird. Der Stammhaltering kann dabei aus Kunststoff oder Aluspritzguß bestehen. Wie die Fig. 19 erkennen läßt, schützt diese Ausführungsform gleichzeitig das sonst aus dem Stammhaltering herausragende Gewindeende der Stützspeiche 2.

Die Fig. 20-22 zeigen vorteilhafte Verbindungsmöglichkeiten eines derartigen U-Profils mit einem Verbindungsstück zwischen dem Stammhaltering und einem Baumpfahl.

Bei der Darstellung in Fig. 20 ist in den Kanal 72 des Stammhalteringes 1 ein Ende eines Verbindungsstückes 73 eingesetzt. Der untere Schenkel 71 des U-Profils weist eine Bohrung 75 auf. Das Verbindungsstück 73 trägt einen eingesetzten, selbsteinschnappenden Stift 74. Beim Einschieben kann dieser Stift 74 in die Bohrung 75 einrasten.

Bei den in den Fig. 21 und 22 dargestellten Ausführungsbeispielen ist eine weitere Sicherung eingebaut, die beim Einsetzen und Herausnehmen spezielle Handhabungen erforderlich macht. Das in Fig. 21 dargestellte Verbindungsstück 76 weist ein gegabeltes Ende mit zwei Gabelabschnitten 77, 78 auf. Der Gabelabschnitt 78 erstreckt sich in den Kanal 72 hinein und hat einen Zapfen 79, der in eine Bohrung 80 im Schenkel 71 eingreifen kann. Der andere Gabelabschnitt 77 umfaßt den Stammhaltering 1 von außen und liegt gegen die Außenseite des anderen Schenkels 70 des U-Profils an. Dieser Gabelabschnitt 77 trägt eine Druckschraube 81. Wenn diese angezogen wird, erfolgt eine Verspannung. Zum Einsetzen und Herausnehmen sind bei dieser Ausführungsform jeweils eine radiale und eine axiale Bewegung erforderlich.

Bei der in Fig. 22 dargestellten Ausführungsform sind drei aufeinanderfolgende Bewegungsschritte erforderlich und zwar eine radiale, dann eine axiale und dann wieder eine radiale. Das Gabelende 78 des Verbindungsstückes 76 trägt einen Zapfen 79, der in ein Langloch 82 im Schenkel 71 des U-Profils eingreift. Der Eingriff ist dabei derart, daß beim Einsetzen gleichzeitig das Ende des Schenkels 70 des U-Profils des Stammhaltringes 1 in eine Nut 83 eingreifen muß, die im Gabelende vorgesehen ist. Zum Festspannen ist wiederum eine Druckschraube 81 vorgesehen. Um eine axiale Trennbewegung durchführen zu können, muß bei diesem Ausführungsbeispiel erst eine radiale Trennbewegung durchgeführt werden, damit der Schenkel 70 aus der Nut 83 heraustreten kann. Erst danach kann eine axiale Bewegung durchgeführt werden, an die sich eine radiale Trennbewegung anschließt. Beim Einsetzen ist der Bewegungsvorgang umgekehrt.

Bei der in Fig. 23 dargestellten Ausführungsform hat der Stammhaltering 1 die Querschnittform eines J, die mit 84 bezeichnet ist. Dieses Profil bildet wieder einen nach außen offenen umlaufenden Kanal 86. Der untere gebogene Schenkel dieses Profils weist einen Wulstrand 87 auf. Das Verbindungsstück 90 weist ein Klauende mit zwei Klauenansätzen 88, 89 auf. Der Klauenansatz 88 ist an den gebogenen Schenkel 85 des J-förmigen Profils angepaßt und der Klauenanssatz 89 ist so ausgebildet, daß er den Wulstrand 87 im eingesetzten Zustand, wie dargestellt, umgreifen kann. Bei dieser Ausführungsform erfolgt das Einsetzen und Herausnehmen durch ein Verschwenken des Verbindungsstückes 90 bei der Darstellung in der Zeichenebene.

Bei den dargestellten Ausführungsformen können in einfacher Weise von den Baumpfählen ausgeübte Druckkräfte übertragen werden.

Der Stammhaltering 1 bringt noch den Vorteil mit sich, daß er allein mit den Baumpfählen ein Gerüst mit erheblichem Festigkeitsverhalten bildet. Eine gesonderte Verlattung der Baumpfähle ist nicht mehr erforderlich und dies spart Material und Arbeitszeit ein.

**Patentansprüche**

1. Mehrteiliger, gepolsterter Stammhaltering eines Baumpfähle aufweisenden Baumständers für einen, von den Baumpfählen umgebenen angepflanzten Jungbaum, der diesen Jungbaum mit einem, während des Wachstums nachstellbaren Spiel umgibt und mit den oberen Endabschnitten der Baumpfähle fest verbunden oder verbindbar ist, dadurch gekennzeichnet, daß sich mindestens zwei Stützspeichen (2, 12, 13, 41) vom Stammhaltering (1) zu einer, dessen Ringzentralbereich (3) durchsetzenden, Ringachse (3a) hin erstrecken, daß die Enden (7) der Stützspeichen (2, 12, 13, 41) zur Ringachse (3a) hin- und von dieser fortbewegbar und in einer gewünschten Einstellung festlegbar sind, und daß die Stützspeichen Polsterelemente (4, 5, 6) tragen.

2. Stammhaltering nach Anspruch 1, dadurch gekennzeichnet, daß die Stützspeichen (2) gegenüber dem Stammhaltering axial bewegbar sind.

3. Stammhaltering nach Anspruch 1, dadurch gekennzeichnet, daß die Stützspeichen (12, 13, 41) am Stammhaltering (1, 34) schwenkbar gelagert sind.

4. Stammhaltering nach einem der Ansprüche 1-3, dadurch gekenzeichnet, daß dieser die Form eines Polygons hat.

5. Stammhaltering nach einem der Ansprüche 1-3, dadurch gekennzeichnet, daß dieser ein Kreisring ist.

6. Stammhaltering nach einem der Ansprüche 1-5, dadurch gekennzeichnet, daß die Ringabschnitte (8, 9 ; 10, 11) des Stammhalteringes (1) mittels Gelenken (14) klappbar verbunden und durch mindestens einen Verschluß (15) in Ringform verriegelbar sind.

7. Stammhaltering nach einem der Ansprüche 1-6, dadurch gekennzeichnet, daß dieser zweiteilig ist.

8. Stammhaltering nach einem der Ansprüche 1, 2, 4-7, dadurch gekennzeichnet, daß die axial bewegbaren Stützspeichen (2) am Stammhaltering (1) mittels einer längenverstellbaren Verschraubung (16, 17, 18, 19, 35, 36) festlegbar sind.

9. Stammhaltering nach Anspruch 8, dadurch gekennzeichnet, daß die axial bewegbaren Stützspeichen (2) am Stammhaltering (1, 34) in Umfangsrichtung ein- und feststellbar montiert sind.

10. Stammhaltering nach einem der Ansprüche 1, 3, 4-7, dadurch gekennzeichnet, daß die Stützspeichen (12, 13, 37) senkrecht zur Ringebene oder in dieser verschwenkbare Hebel sind, die in Eingriff mit einem am Stammhaltering drehbar gelagerten Stellring (38, 39, 40) stehen.

11. Stammhaltering nach einem der Ansprüche 8-11, dadurch gekennzeichnet, daß die Stützspeichen (2, 12, 13) an ihren Enden Puffer (4) und/oder gebogene armierte Polsterelemente (5) aus kälteflexiblem Material tragen.

12. Stammhaltering nach Anspruch 10, dadurch gekennzeichnet, daß die Kante (6) der Stützspeichen (41) eine Polsterung aus kälteflexiblem Material aufweist.

13. Stammhaltering nach einem der Ansprüche 1-12, von dem sich wenigstens zwei Pfahlhalter nach außen erstrecken, dadurch gekennzeichnet, daß die Pfahlhalter (21) am Stammhaltering (1) in einer gewünschten Längeneinstellung in lösbarer Weise festlegbar sind.

14. Stammhaltering nach Anspruch 13, dadurch gekennzeichnet, daß die Pfahlhalter (21) zur Einstellung der Kipplage einer Pfahlgabel (27) arretierbare Gelenke (26) aufweisen.

15. Stammhaltering nach Anspruch 13 oder 14, dadurch gekennzeichnet, daß die Pfahlhalter (21) in Umfangsrichtung einstellbar montiert sind.

16. Stammhaltering nach einem der Ansprüche 8, 11, 13-15, dadurch gekennzeichnet, daß die Stützspeichen (2) am Stammhaltering (1) in Öffnungen (17) und/oder Gewindebohrungen (19) mittels Kontermuttern (18) axial festlegbar sind.

17. Stammhaltering nach einem der Ansprüche 8, 9, 11, 13-15, dadurch gekennzeichnet, daß die Stützspeichen (2) in Umfangsschlitzen (42) des Stammhalterings (1) mittels Kontermuttern (18, 36) an diesem axial und/oder in der Umfangsstellung festlegbar sind.

18. Stammhaltering nach einem der Ansprüche 1, 2, 5-9, 11, 13-17, dadurch gekennzeichnet, daß ein zweiteiliger (8, 9) kreisförmiger Stammhaltering (1) sechs, vorzugsweise im gleichen Winkelabstand voneinander angeordnete, Stützspeichen (2) und drei, vorzugsweise im gleichen Winkelabstand voneinander angeordnete, Pfahlhalter (21) trägt.

19. Stammhaltering nach einem der Ansprüche 1, 3, 5-7, 10-15, dadurch gekennzeichnet, daß die senkrecht zur Ringebene verschwenkbaren Stützspeichen (12) zweiarmige Hebel sind, deren einer Hebelarm (43) in Führungen (45, 46, 47) des Stellringes (38) eingreift.

20. Stammhaltering nach Anspruch 19, dadurch gekennzeichnet, daß die beiden Hebelarme (43, 44) der Stützspeichen (12) einen stumpfen Winkel einschließen.

21. Stammhaltering nach einem der Ansprüche 1, 3, 5-7, 10-12, dadurch gekennzeichnet, daß die senkrecht zur Ringebene verschwenkbaren Stützspeichen (13) Hebel sind, die sich durch Führungsnuten (48) im Stellring (38) hindurcherstrecken.

22. Stammhaltering nach einem der Ansprüche 1, 3, 5-7, 10-12, dadurch gekennzeichnet, daß dieser Stammhaltering (34) einen kreisförmigen Querschnitt aufweist, auf dem festspannbare (50) Tragringe (49) für die Stützspeichen (13) angeordnet sind.

23. Stammhaltering nach einem der Ansprüche 1, 3, 5-7, 10-12, dadurch gekennzeichnet, daß die in der Ringebene verschwenkbaren Stützspeichen (41) Hebel sind, die Führungszapfen (52) tragen, die in Führungsnuten (48) eines Stellringes (39) eingreifen.

24. Stammhaltering nach einem der Ansprüche 1, 3, 5-7, 10-12, dadurch gekennzeichnet, daß die senkrecht zur Ringebene verschwenkbaren Stützspeichen am Stammhaltering (1) in Umfangsrichtung (53) gehaltene, gebogene Hebel (41) sind, die eine Öffnung (54) mit polygonalem Querschnitt aufweisen, durch die sich ein Spiralen (55) aufweisender Stellring (40) erstreckt.

25. Stammhaltering nach einem der Ansprüche 10, 19-21, 24, dadurch gekennzeichnet, daß der Stellring (38, 39, 40) lediglich einen Antrieb aufweist (Fig. 12).

26. Stammhaltering nach einem der Ansprüche 1-21, 23-25, dadurch gekennzeichnet, daß der Ringquerschnitt ein um den Stammhaltering (1) umlaufenden Kanal (72) bildendes U-Profil ist.

27. Stammhaltering nach Anspruch 26, dadurch gekennzeichnet, daß ein Verbindungsstück (73) zwischen Stammhaltering (1) und Baumpfahl in den Kanal (72) des U-Profils einsetzbar ist, dessen einer Schenkel (71) eine Anzahl Einschnappöffnungen (75) aufweist, in die ein in das Verbindungsstück (73) eingesetzter, selbstschnappender Stift (74) einrastbar ist. (Fig. 20).

28. Stammhaltering nach Anspruch 26, dadurch gekennzeichnet, daß ein Verbindungsstück (76) zwischen Stammhaltering (1) und Baumpfahl mit einem gegabelten Ende (77, 78) in den Kanal (72) des U-Profils derart einsetzbar ist, daß ein Gabelabschnitt (78) im Kanal (72) gegen die Innenseite eines Schenkels (71) anliegt und mittels eines Zapfens (79) in eine Bohrung (80) im Schenkel (71) eingreift, und daß der andere Gabelabschnitt (77) auf der Außenseite des anderen Schenkels (70) aufliegt und gegen diese mittels einer Druckschraube (81) festspannbar ist. (Fig. 21)..

29. Stammhaltering nach Anspruch 26, dadurch gekennzeichnet, daß der Zapfen (79) am Gabelabschnitt (78) des Verbindungsstückes (76) in ein Langloch (82) und der andere Schenkel (70) des U-Profils in eine Nut (83) im gegabelten Ende des Verbindungsstückes (76) eingreift. (Fig. 22).

30. Stammhaltering nach einem der Ansprüche 1-21, 23-25, dadurch gekennzeichnet, daß der Ringquerschnitt ein um den Stammhaltering umlaufenden Kanal (86) bildendes J-Profil (84) ist, dessen unterer, getragener Schenkel (85) ein Wullstrand (87) aufweist und in den ein Klauenende (89) eines Verbindungsstückes (90) zwischen Stammhaltering und Baumpfahl einsetzbar ist.

## Claims

1. Padded trunk holding ring, in several parts, of a tree stand possessing tree stakes, for a planted young tree surrounded by the tree stakes, which ring encompasses this young tree, with a play adjustable during the growth, and is connected or connectible to the upper end sections of the tree stakes, characterised in that at least two support spokes (2, 12, 13, 41) extend from the trunk holding ring (1) to a ring axis (3a) passing through its ring centre region (3), that the ends (7) of the support spokes (2, 12, 13, 41) are movable towards and away from the ring axis (3a) and are capable of being set in a desired adjustment, and that the support spokes carry padding elements (4, 5, 6).

2. Trunk holding ring according to Claim 1, characterised in that the support spokes (2) are axially movable relative to the trunk holding ring.

3. Trunk holding ring according to Claim 1, characterised in that the support spokes (12, 13, 41) are pivotably mounted at the trunk holding ring (1, 34).

4. Trunk holding ring according to one of the Claims 1-3, characterised in that this has the form of a polygon.

5. Trunk holding ring according to one of the Claims 1-3, characterised in that this is a circular ring.

6. Trunk holding ring according to one of the Claims 1-5, characterised in that the ring sections (8, 9 ; 10, 11) of the trunk holding ring (1) are pivotably connected by means of joints (14) and are capable of being bolted into annular form by means of at least one closure (15).

7. Trunk holding ring according to one of the Claims 1-6, characterised in that this is in two parts.

8. Trunk holding ring according to one of the Claims 1, 2, 4-7, characterised in that the axially movable support spokes (2) are capable of being fixed at the trunk holding ring (1) by means of a longitudinally adjustable screw fixture (16, 17, 18, 19, 35, 36).

9. Trunk holding ring according to Claim 8, characterised in that the axially movable support spokes (2) are mounted at the trunk holding ring (1, 34) in a fashion adjustable or fixable in peripheral direction.

10. Trunk holding ring according to one of the Claims 1, 3, 4-7, characterised in that the support spokes (12, 13, 37) are levers pivotable perpendicular to or within the plane of the ring, which stand in engagement with an adjusting ring (38, 39, 40) rotatably mounted on the trunk holding ring.

11. Trunk holding ring according to one of the Claims 8-11, characterised in that the support spokes (2, 12, 13) carry at their ends buffers (4) and/or curved, reinforced padding elements (5) of a material flexible when cold.

12. Trunk holding ring according to Claim 10, characterised in that the edge (6) of the support spokes (41) possesses a padding of material flexible when cold.

13. Trunk holding ring according to one of the Claims 1-12, from which at least two stake holders extend outwards, characterised in that the stake holders (21) are capable of being fixed to the trunk holding ring, in detachable fashion, in a desired longitudinal setting.

14. Trunk holding ring according to Claim 13, characterised in that the stake holders (21) possess lockable hinges (26) for adjusting the tilt of a stake fork (27).

15. Trunk holding ring according to Claim 13 or 14, characterised in that the stake holders (21) are mounted as adjustable in peripheral direction.

16. Trunk holding ring according to one of the Claims, 8, 11, 13-15, characterised in that the support spokes (2) are capable of being fixed as axially adjustable to the tree holding ring (1) in openings (17) and/or threaded holes (19) by means of lock nuts.

17. Trunk holding ring according to one of the Claims 8, 9, 11, 13-15, characterised in that the support spokes (2) are fixable by means of lock nuts (18, 36) in peripheral slots (42) of the trunk holding ring (1), to the latter, as adjustable axially and/or in the peripheral position.

18. Trunk holding ring according to one of the Claims 1, 2, 5-9, 11, 13-17, characterised in that a two part (8, 9) circular trunk holding ring (1) bears six support spokes (2), preferably arranged at the same angular distance from one another, and three stake holders (21), preferably arranged at the same angular distance from one another.

19. Trunk holding ring according to one of the Claims 1, 3, 5-7, 10-15, characterised in that the support spokes (12), pivotable perpendicularly to the plane of the ring, are two-armed levers, one lever arm (43) of which engages in guides (45, 46, 47) of the adjusting ring (38).

20. Trunk holding ring according to Claim 19, characterised in that the two lever arms (43', 44) of the support spokes (12) enclose an obtuse angle.

21. Trunk holding ring according to one of the Claims 1, 3, 5-7, 10-12, characterised in that the support spokes (13), pivotable perpendicularly to the plane of the ring, are levers which extend through guide grooves (48) in the adjusting ring (38).

22. Trunk holding ring according to one of the Claims 1, 3, 5-7, 10-12, characterised in that this trunk holding ring (34) shows a circular crosssection whereon support rings (49) capable of being tightened (50), are arranged for the support spokes (13).

23. Trunk holding ring according to one of the Claims 1, 3, 5-7, 10-12, characterised in that the support spokes (41), pivotable in the plane of the ring, are levers which carry guide pins (52), which engage in guide grooves (48) of an adjusting ring (39).

24. Trunk holding ring according to one of the Claims 1, 3, 5-7, 10-12, characterised in that the support spokes pivotable perpendicularly to the plane of the ring and held to the trunk holding ring (1) in peripheral direction (53), are arcuate levers (41), which possess an aperture (54) which polygonal cross-section, through which extends an adjusting ring (40) possessing spirals (55).

25. Trunk holding ring according to one of the Claims 10, 19-21, 24, characterised in that the adjusting ring (38, 39, 40) possesses only one actuating mechanism (fig. 12).

26. Trunk holding ring according to one of the Claims 1-21, 23-25, characterised in that the cross-section of the ring is a U profile forming a channel (72) running around the trunk holding ring (1).

27. Trunk holding ring according to Claim 26, characterised in that a connecting piece (73) is capable of bein inserted between trunk holding ring (1) and tree stake into the channel (72) of the U profile, one leg (71) of which possesses a number of snap-in apertures (75) into which a self-snapping pin (74) inserted into the connecting piece (73) is capable of being engaged (fig. 20).

28. Trunk holding ring according to Claim 26, characterised in that a connecting piece (76) is capable of being inserted, between trunk holding ring (1) and tree stake, by a forked end (77, 78) into the channel (72) of the U profile, in such a manner that one fork section (78) within the channel (72) lies close against the inside of one leg (71) and catches by means of a pin (79) into a hole (80) in the leg (71), and that the other fork section (77) bears on the outside of the other leg (70) and is capable of being tightened against this side by means of a pressure screw (81) (fig. 21).

29. Trunk holding ring according to Claim 26, characterised in that the pin (79) on the fork section (78) of the connecting piece (76) engages into an elongated hole (82), and the other leg (70) of the U profile engages into a groove (83) in the forked end of the connecting piece (76) (fig. 22).

30. Trunk holding ring according to the Claims 1-21, 23-25, characterised in that the cross section of the ring is a J profile (83) forming a channel (86) running around the trunk holding ring, which profile's lower supported leg (85) possesses a beaded edge (87), and into which beaded edge a claw end (89) of a connecting piece (90) between trunk holding ring and tree stake is capable of insertion.

**Revendications**

1. Anneau de support de tronc rembourré et en plusieurs parties pour un support d'arbre comportant des pieux d'arbre, destiné à un jeune arbre planté entouré par les pieux, qui entoure ce jeune arbre en laissant un jeu réglable au cours de la croissance et qui est relié de manière fixe ou qui est reliable de cette manière aux sections terminales supérieures des pieux d'arbre, caractérisé en ce que au moins deux rayons de soutien (2, 12, 13, 41) s'étendent depuis l'anneau de support de tronc (1) en direction d'un axe d'anneau (3a) qui traverse sa région centrale (3), en ce que les bouts (7) des rayons de soutien (2, 12, 13, 41) sont déplaçables de façon à être écartés et rapprochés de l'axe d'anneau (3a) de celui-ci et peuvent être fixés selon un ajustement désiré et en ce que les rayons de soutien sont munis d'éléments de rembourrage (4, 5, 6).

2. Anneau de support de tronc suivant la revendication 1 caractérisé en ce que les rayons de soutien (2) sont déplaçables axialement par rapport à l'anneau de support de tronc.

3. Anneau de support de tronc suivant la revendication 1 caractérisé en ce que les rayons de soutien (12, 13, 41) sont disposés de manière orientable sur l'anneau de support de tronc (1, 34).

4. Anneau de support de tronc suivant l'une des revendications 1 à 3 caractérisé en ce qu'il épouse la forme d'un polygone.

5. Anneau de support de tronc suivant l'une des revendications 1 à 3 caractérisé en ce qu'il a une forme circulaire.

6. Anneau de support de tronc suivant l'une des revendications 1 à 5 caractérisé en ce que les sections annulaires (8, 9 ; 10, 11) de l'anneau de support de tronc (1) sont reliées de manière basculante au moyen d'articulations (14) et peuvent être verrouillées en forme d'anneau à l'aide d'au moins un dispositif de fermeture (15).

7. Anneau de support de tronc suivant l'une des revendications 1 à 6 caractérisé en ce qu'il comporte deux parties.

8. Anneau de support de tronc suivant l'une des revendications 1, 2, 4 à 7 caractérisé en ce que les rayons de soutien (2) sont fixables de manière axialement déplaçable sur l'anneau de support de tronc (1) au moyen d'un raccordement fileté (16, 17, 18, 19, 35, 36) dont la longueur est réglable.

9. Anneau de support de tronc suivant la revendication 8 caractérisé en ce que les rayons de soutien (2) axialement déplaçables sont montés et sont fixables sur l'anneau de support de tronc (1, 34) en direction de la périphérie.

10. Anneau de support de tronc suivant l'une des revendications 1, 3, 4 à 7, caractérisé en ce que les rayons de soutien (12, 13, 37) constituent des leviers perpendiculaires au plan de l'anneau ou peuvent être basculés à cet effet, lesdits leviers étant en prise avec un anneau de réglage (38, 39, 40) monté en rotation sur l'anneau de support de tronc.

11. Anneau de support de tronc suivant l'une des revendications 8 à 11 caractérisé en ce que les rayons de soutien (2, 12, 13) comportent à leur bout un tampon (4) et/ou un élément de rembourrage armé et courbé (5) en une matière flexible à froid.

12. Anneau de support de tronc suivant la revendication 10 caractérisé en ce que les arêtes (6) des rayons de soutien (41) comportent un rembourrage en une matière flexible à froid.

13. Anneau de support de tronc suivant l'une des revendications 1 à 12 dont au moins deux supports de pieu s'étendent vers l'extérieur caractérisé en ce que les supports de pieu (21) sont fixables de manière amovible à l'anneau de support de tronc (1), et ce en ayant une longueur désirée.

14. Anneau de support de tronc suivant la revendication 13 caractérisé en ce que les supports de pieu (21) présentent une articulation (26) fixable pour le réglage du basculement d'une fourche pour pieu (27).

15. Anneau de support de tronc suivant l'une des revendications 13 ou 14 caractérisé en ce que les supports de pieu (21) sont montés de manière réglable en direction de la périphérie.

16. Anneau de support de tronc suivant l'une des revendications 8, 11, 13 à 15 caractérisé en ce que les rayons de soutien (2) sont fixables axialement à l'anneau de support de tronc (1) dans des ouvertures (17) et/ou des perforations filetées (19) au moyen de contre-écrous (18).

17. Anneau de support de tronc suivant l'une des revendications 8, 9, 11, 13 à 15 caractérisé en ce que les rayons de soutien (2) se trouvant dans des fentes périphériques (42) de l'anneau de support de tronc (1) sont fixables à celui-ci axialement et/ou dans la position périphérique au moyen de contre-écrous (18, 36).

18. Anneau de support de tronc suivant l'une des revendications 1, 2, 5 à 9, 11, 13 à 17 caractérisé en ce qu'un anneau de support de tronc circulaire (1) en deux parties (8, 9) comporte six rayons de soutien (2), disposés de préférence à la même distance angulaire l'un par rapport à l'autre, et trois supports de pieu (21) disposés de préférence à la même distance angulaire l'un par rapport à l'autre.

19. Anneau de support de tronc suivant l'une des revendications 1, 3, 5 à 7, 10 à 15 caractérisé en ce que les rayons de soutien (12) basculables perpendiculairement au plan de l'anneau constituent des leviers à deux bras dont un bras (43) engrène une glissière (45, 46, 47) de l'anneau de réglage (38).

20. Anneau de support de tronc suivant la revendication 19 caractérisé en ce que les deux bras de levier (43, 44) des rayons de soutien (12) forment un angle obtus.

21. Anneau de support de tronc suivant l'une des revendications 1, 3, 5 à 7, 10 à 12 caractérisé en ce que les rayons de soutien (13) basculables perpendiculairement au plan de l'anneau constituent des leviers qui traversent des rainures de guidage (48) prévues dans l'anneau de réglage (38).

22. Anneau de support de tronc suivant l'une des revendications 1, 3, 5 à 7, 10 à 12 caractérisé en ce que ledit anneau de support de tronc (34) présente une section transversale circulaire sur laquelle sont disposés des anneaux de support (49) blocables (50) pour les rayons de soutien (13).

23. Anneau de support de tronc suivant l'une des revendications 1, 3, 5 à 7, 10 à 12 caractérisé en ce que les rayons de soutien (41) basculables dans le plan de l'anneau constituent des leviers pourvus de tenons de guidage (52) qui engrènent des rainures de guidage (48) prévues dans un anneau de réglage (39).

24. Anneau de support de tronc suivant l'une des revendications 1, 3, 5 à 7, 10 à 12 caractérisé en ce que les rayons de soutien basculables perpendiculairement au plan de l'anneau consistent en des leviers courbés (41) retenus dans l'anneau de support de tronc (1) en direction de la périphérie (53) et présentant un orifice (54) de section transversale polygonale à travers lequel passe un anneau de réglage (40) comportant des spirales (55).

25. Anneau de support de tronc suivant l'une des revendications 10, 19 à 21, 24 caractérisé en ce que l'anneau de réglage (38, 39, 40) présente uniquement un dispositif d'entraînement (figure 12).

26. Anneau de support de tronc suivant l'une des revendications 1 à 21, 23 à 25 caractérisé en ce que la section transversale de l'anneau est constituée par un profilé en U qui forme un canal (72) entourant l'anneau de support de tronc (1).

27. Anneau de support de tronc suivant la revendication 26 caractérisé en ce qu'une pièce de raccordement (73) peut être placée entre l'anneau de support de tronc (1) et le pieu d'arbre dans le canal (72) du profilé en U, un flanc (71) de ce profilé présentant une pluralité d'orifices d'encliquetage (75) dans lesquels une goupille (74) auto-encliquetable disposée dans la pièce de raccordement (73) peut venir s'encliqueter (figure 20).

28. Anneau de support de tronc suivant la revendication 26 caractérisé en ce qu'une pièce de raccordement (76) à extrémité fourchue (77, 78) peut être placée entre l'anneau de support de tronc (1) et le pieu d'arbre dans le canal (72) du profilé en U de telle manière qu'une branche de la fourche (78) se trouve dans le canal (72) contre le côté intérieur d'un flanc du profilé (71) et engrène le flanc (71) au moyen d'un tenon (79) faisant prise dans un évidement (80) prévu dans le flanc (71) et que l'autre branche de la fourche (77) se trouve sur le côté extérieur de l'autre flanc (70) et puisse être bloquée contre celle-ci au moyen d'une vis de serrage (81) (figure 21).

29. Anneau de support de tronc suivant la revendication 26 caractérisé en ce que le tenon (79) de la branche en fourche (78) de la pièce de raccordement (76) engrène un trou oblong (82) et en ce que l'autre flanc (70) du profilé en U engrène une rainure (83) pratiquée dans l'extrémité fourchue de la pièce de raccordement (76) (figure 22).

30. Anneau de support de tronc suivant l'une des revendications 1 à 21, 23 à 25 caractérisé en ce que la section transversale de l'anneau est constituée par un profilé en J (84) qui forme un canal (86) entourant l'anneau de support de tronc, le flanc inférieur supporté (85) de ce profilé présentant un bord renflé (87) dans lequel l'extrémité à griffes (89) d'une pièce de raccordement (90) entre l'anneau de support de tronc et le pieu d'arbre peut être enfoncée.

Fig.1

Fig.2

Fig. 3

Fig. 4

Fig. 5

Fig. 6

Fig. 7

Fig. 8

Fig. 9

Fig. 10

Fig. 11

Fig.12

Fig.13

Fig.14

Fig.15

Fig.16

Fig.17

Fig.18

Fig.19

Fig.20

Fig.21

Fig.22

Fig.23